# FASCICULE DE BREVET EUROPEEN

(11) **EP 1 649 187 B1**
(45) Date de publication et mention de la délivrance du brevet: **17.08.2011**
(21) Numéro de dépôt: 04739829.2
(22) Date de dépôt: 11.06.2004
(51) Int. Cl.: F16D 65/56, F16D 65/14, F16D 65/20

(54) **FREIN DE PARKING A RIGIDITE AMELIOREE**
FESTSTELLBREMSE MIT VERBESSERTER STARRHEIT
PARKING BRAKE WITH IMPROVED RIGIDITY

(30) Priorité: 20.06.2003 FR 0307520
(43) Date de publication de la demande: 26.04.2006
(73) Titulaire: ROBERT BOSCH GMBH, 70442 Stuttgart (DE)
(72) Inventeur: CARUSO, Corrado, I-70121 Bari (IT); TRISTANO, Nicola, I-75100 Matera (IT)
(74) Mandataire: Hurwic, Aleksander Wiktor
(86) Numéro de dépôt international: PCT/EP2004/006340
(87) Numéro de publication internationale: WO 2004/113757

(56) Documents cités:
- GB-A- 2 178 807
- US-A- 4 014 414
- US-A- 5 954 162
- US-B1- 6 311 808

## Description

La présente invention se rapporte principalement à un frein de parking à rigidité améliorée.

La demande de brevet FR02/15244 décrit un frein de parking activable par un fluide sous pression avec blocage mécanique. Un tel frein stocke, par déformation de l'étrier une énergie élastique nécessaire à l'application ferme des patins sur le disque assurant l'immobilisation du véhicule.

La rigidité d'un étrier de frein est habituellement comprise entre 50 000 et 90 000 N/mm en fonction du matériau (aluminium, fonte) et du diamètre du piston employé. La rigidité de l'ensemble formé par le disque et les deux patins de frein varie entre 5 x 10⁴ N/mm et 8 x 10⁵ N/mm en fonction de l'usure des garnitures de frein.

Ce frein comporte par ailleurs un dispositif de rattrapage d'usure de patins de frein comprenant un écrou et une vis se dévissant par rapport à l'écrou au fur et à mesure de l'usure des patins de freins. La vis comporte un chapeau conique prenant appui sur la protée conique du piston. L'écrou est disposé à l'opposé de la vis, vers l'arrière, et prend appui sur des moyens de blocage du frein de parking en condition activée. La rigidité d'un exemple de réalisation d'un tel dispositif de rattrapage d'usure de patin est égale à 69 000 N/mm.

Ainsi, si le dispositif de rattrapage d'usure de patins de frein n'est pas complètement comprimé à une étape intermédiaire d'activation du frein de parking, sa compression, par exemple lors du relâchement de la pression hydraulique d'activation entraîne un relâchement des autres composants notamment de l'étrier résultant en une diminution de la force d'application des patins sur le disque.

Ainsi, une partie de l'énergie communiquée aux freins de parking est absorbée par le dispositif de rattrapage d'usure de patins sans être totalement restituée.

Le document US 4 014414 A montre un frein de parking d'après le préambule de la revendication 1.

C'est par conséquent un but de la présente invention d'offrir un dispositif de rattrapage d'usure de patins pour freins de parking ayant une grande rigidité.

C'est également un but de la présente invention d'offrir un tel dispositif présentant un faible encombrement.

C'est aussi un but de la présente invention d'offrir un tel dispositif présentant une faible masse.

C'est également un but de la présente invention d'offrir un tel dispositif présentant une grande sûreté de fonctionnement et un prix de revient modéré.

C'est aussi un but de la présente invention d'offrir un frein de parking où le blocage ou verrouillage en position activée nécessite un effort modéré.

La présente a principalement pour objet un frein de parking à disque comportant un piston d'application de patins sur le disque, des moyens d'amener d'un fluide sous pression suffisante pour être susceptible, sur commande, d'appliquer fermement les patins sur le disque, des moyens de blocage du piston dans une première condition dans laquelle les patins sont fermement appliqués sur le disque caractérisé en ce que les moyens de blocage comportent une clavette et un actionneur de déplacement sur commande de ladite clavette, entre une première position dans laquelle le piston du frein est libre de reculer et une deuxième position dans laquelle la clavette bloque le recul du piston, et en ce qu'il comporte un dispositif de rattrapage d'usure de patins de frein assurant lorsque le frein de parking est activé la transmission de force entre la clavette et le piston comprenant une vis et un écrou se dévissant l'un par rapport à l'autre au fur et à mesure de l'usure des patins, la vis comportant une surface d'appui sur la clavette et l'écrou comprenant une surface d'appui sur le piston.

La présente a aussi pour objet un frein caractérisé en ce que le piston comporte un puits axial central d'axe X de réception de la vis le diamètre du puits étant légèrement supérieur au diamètre de la vis.

La présente a également pour objet un frein caractérisé en ce que la vis est munie d'un joint d'étanchéité.

La présente a aussi pour objet un frein caractérisé en ce qu'une première extrémité de la vis munie de la surface d'appui sur la clavette forme un chapeau muni d'une partie centrale conique en pente douce, d'un décrochement coaxial à l'axe X de la vis et d'une zone radialement périphérique tronconique en pente douce.

La présente a également pour objet un frein caractérisé en ce que la clavette comporte une première zone d'appui de la vis correspondant à une condition non activée du frein de parking, plane et orthogonale à l'axe X de la vis, une deuxième zone correspondant à une condition activée du frein de parking, en pente douce et une transition en marche d'escalier reliant lesdites première et deuxième zones.

La présente a aussi pour objet un frein caractérisé en ce que le piston comporte une portée conique concave et l'écrou comporte une portée conique convexe complémentaire, d'appui sur ladite portée conique concave du piston.

La présente a également pour objet un frein caractérisé en ce qu'il comporte des moyens de fixation de l'écrou sur le piston comprenant une rondelle disposée dans une gorge radialement interne du piston des moyens de rappel élastique et une butée ou un roulement à bille.

La présente a aussi pour objet un frein caractérisé en ce qu'il comporte un ressort de rappel de la vis vers la clavette tronconique ou en calotte sphérique muni de fentes radiales sur une partie de son rayon.

La présente a également pour objet un frein caractérisé en ce que le pas de vis de la vis et de l'écrou a un jeu fonctionnel distribué entre la vis et l'écrou.

La présente a aussi pour objet un frein selon l'une quelconque des revendications précédentes caractérisé en ce qu'il comporte des moyens d'activation hydraulique assurant le déplacement de la clavette entre lesdites première et deuxième positions comprenant une électrovanne.

L'invention sera mieux comprise aux moyens de la description ci-après des figures annexées données à titre d'exemple explicatif et sur lesquelles :
la figure 1 est une vue schématique en coupe d'un dispositif de rattrapage d'usure selon la présente invention ;
la figure 2 est une vue en coupe d'un exemple de réalisation d'un frein selon la présente invention.

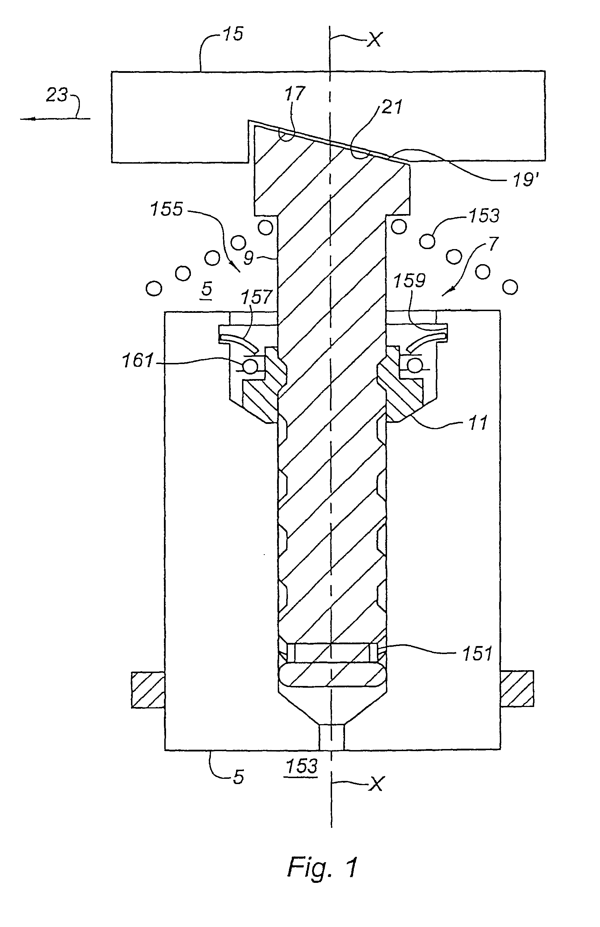

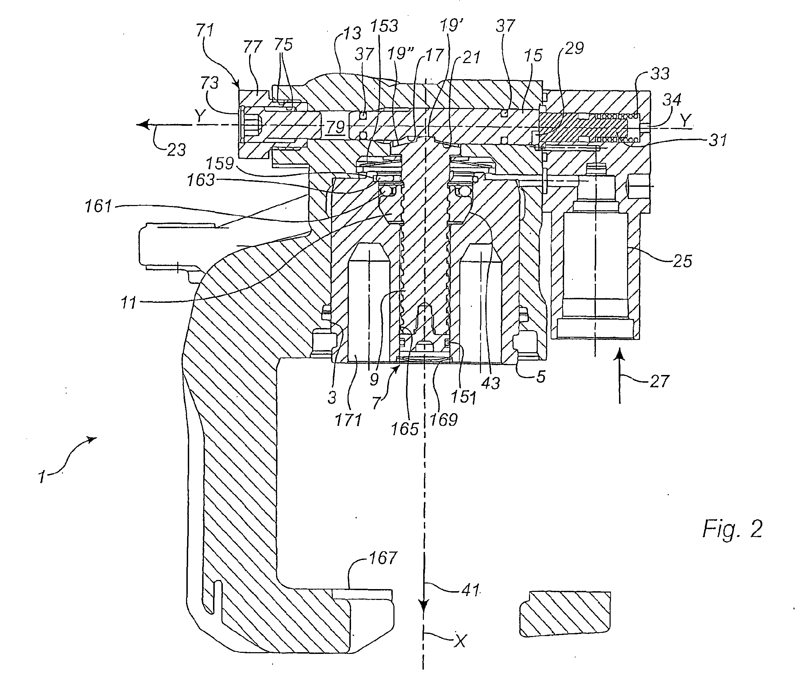

Sur les figures 1 et 2, on a utilisé les mêmes références pour désigner les mêmes éléments.

Sur la figure 1, on peut voir un premier exemple de réalisation d'un dispositif 7 de rattrapage d'usure de patins selon l'invention comportant une vis 9 avantageusement d'axe X d'un piston de frein 5 disposé dans un cylindre de frein (non illustré sur la figure 1). Une première extrémité 19' de la vis 9 est adaptée pour coopérer avec une clavette 15 coulissante selon un axe Y orthogonal à l'axe X du piston 5 muni d'une rampe longitudinale 17, 21 (figure 1) ou d'une première zone d'appui 17 et d'une deuxième zone d'appui 21 décalée selon l'axe Y par rapport à la zone 17 et présentant une extension vers l'avant, selon l'axe X, en direction du piston hydraulique 5, supérieure à l'extension selon l'axe X dans cette même direction, de la zone 17. La deuxième extrémité de la vis 9 opposée à l'extrémité 19' est munie d'un joint 151 permettant d'isoler le liquide de frein présent dans le frein 5 par rapport à l'atmosphère 153.

Dans l'exemple illustré sur la figure 1, le joint 151 est un joint à lèvres alors que dans l'exemple de réalisation illustré sur la figure 2, le joint 151 est un j oint torique.

Dans .l'exemple illustré sur la figure 1, l'extrémité 19' comporte une rampe complémentaire de la rampe 17, 21 de la clavette 15.

Au contraire, l'extrémité 19' de la vis 9 de la figure 2 a la forme d'un chapeau muni d'une partie centrale conique en pente douce, d'un décrochement vertical (coaxial à l'axe X) et d'une zone radialement périphérique 19" tronconique, également en pente douce. La pente est par exemple égale à 13°.

La zone 17 de la clavette 15 de la figure 2 est plane et orthogonale à l'axe X de la vis (9). La zone 21 de la clavette 15 de la figure 2 est en pente douce inclinée de, par exemple 13°. Une transition en marche d'escalier relie les zones 17 et 21.

La vis 9 est avantageusement disposée dans un puits 165, d'axe X traversant le piston 5.

Cette disposition permet d'augmenter son diamètre à par exemple 14 mm.

A l'opposé de la plaquette de freins (non représentée), du côté de la clavette 15, le puits 165 s'élargit en une portée conique 43 puis en une zone cylindrique dont le diamètre est supérieur au diamètre du puits 165. L'écrou 11 comporte une portée conique correspondant à la portée conique 43 du piston 5.

Avantageusement, le dispositif selon la présente invention comporte des moyens 153 de rappel élastique de la vis 9 vers la clavette 15. Avantageusement, comme illustré sur la figure 2, on met en oeuvre un ou plusieurs ressorts tronconiques ou en forme de calotte sphérique comportant des découpes s'étendant sur une partie de l'extension radiale du ressort. Avantageusement, le ressort comporte 12 découpes réparties régulièrement angulairement.

Un tel ressort présente l'avantage d'exercer une force de rappel constante sans augmentation d'effort lors de la translation de la vis 11 selon la flèche 41. De plus, le ressort 153 avantageusement mis en oeuvre présente un très faible encombrement.

Ce ressort 153 est par exemple disposé entre une rondelle et un circlip.

Avantageusement, le frein selon la présente invention comporte un dispositif 155 de maintien de la portée conique de la vis 11 en contact avec une portée conique 43 du piston 5 comprenant par exemple une rondelle élastique 157 disposée dans une gorge radialement interne 159 du piston 5 et une butée à billes 161 (figure 1) où un ressort radial et axial 163 plaquent une butée à billes ou un roulement à billes 161.

La vis 9 et l'écrou 11 sont munis de pas de vis complémentaires par exemple à quatre filets avec un jeu suffisant pour permettre, de manière connue, le dévissage (rattrapage d'usure de patins) ou, au contraire, la transmission axiale d'efforts entre la clavette 15 prenant appui sur une partie arrière 13 de l'étrier 1 et le piston 5 appliqué sur une première plaquette elle-même, appliquée sur le disque. Avantageusement, le jeu du pas de vis est distribué entre la vis, l'écrou et/ou au niveau de l'espace entre la zone 17 de la clavette 15 et l'extrémité 19' de la vis 11 ce qui permet de diminuer le mouvement relatif de la vis 11 par rapport au piston 5 lors du freinage et. de la descente du piston 5 selon la flèche 41. Sur la face opposée du disque, une deuxième plaquette est appliquée par le nez d'étrier 167. Avantageusement, comme illustré sur la figure 2, la vis 9 comporte un capot 169 avantageusement vissé.

Avantageusement, le piston 5 comporte des puits axiaux 171 régulièrement répartis angulairement permettant d'alléger sa structure.

La rigidité de l'exemple de réalisation du dispositif de rattrapage d'usure de patins illustré sur la figure 2 est égale à 200 000 N/mm.

Nous allons expliquer la structure et le fonctionnement des freins de parking de la figure 2 qui correspond à un frein à disque à étrier 1 flottant assurant également la fonction de frein principal de service. Dans l'exemple illustré, on a représenté un frein arrière étant bien entendu que la mise en oeuvre d'un frein de parking selon la présente invention sur des roues avant et/ou d'un frein de parking séparé du frein principal de service ne sort pas du cadre de la présente invention.

L'étrier 1 est muni d'un alésage borgne 3 formant cylindre hydraulique d'un piston 5 muni d'un dispositif 7 de rattrapage d'usure de patins de frein comportant, une vis 11 et un écrou 9 se dévissant par rapport à la vis 11 au fur et à mesure de l'usure de patins de frein. Une partie arrière 13 de l'étrier 1 comporte un logement d'une clavette 15 de blocage mécanique, direct ou, indirect. Dans l'exemple représenté, le blocage s'effectue par l'intermédiaire du dispositif 7 de rattrapage de l'usure des patins, du piston 5 dans une première condition dans laquelle les patins (non représentés) sont fermement appliqués sur le disque (également non représenté).
On entend par application ferme, une application permettant d'immobiliser les véhicules, notamment sur une pente. On considère couramment qu'une telle application correspond à une force de 10 000 N à 20 000 N.

Dans une deuxième condition, la clavette 15 ne s'oppose pas au recul du piston 5. Dans l'exemple préféré illustré, la clavette 15 est montée à translation selon un axe Y perpendiculaire à l'axe X du piston hydraulique 5. La clavette 15 comporte une première zone 17 d'appui de la face arrière 19' de la vis 11 et une deuxième zone d'appui 21, décalée selon l'axe Y par rapport à la zone 17 et présentant une extension vers l'avant, selon l'axe X, en direction du piston hydraulique 5 supérieur à l'extension selon l'axe X, dans cette même direction, de la zone 17.

Avantageusement, la zone 21 présente une pente douce formant une rampe dont l'orientation facilite le déplacement de la clavette 15 au contact éventuel de la face arrière 19', selon la flèche 23. Dans l'exemple illustré, l'extension selon l'axe X des zones 21 augmente de gauche vers la droite.

Le frein selon la présente invention comporte un actionneur permettant de déplacer, sur commande, par exemple lorsque le conducteur appuie sur une touche, un levier, une pédale ou analogue, situé dans l'habitacle, la clavette 15 selon l'axe Y, dans le sens de la flèche 23. Ce déplacement assurant le blocage de frein de parking peut également être commandé par un calculateur, par exemple lorsque le moteur thermique du véhicule a été stoppé et/ou lorsque le conducteur a quitté le véhicule. Par contre, il est avantageux d'utiliser uniquement le freinage hydraulique sans blocage mécanique du piston lors de l'arrêt au feu rouge ou lors de démarrage en côte (Hill Holder en terminologie anglo-saxonne). Dans l'exemple préféré illustré, l'actionnement de la clavette 15 est hydraulique par l'intermédiaire d'une vanne 25, de type fermé au repos reliant, sur commande 27, une chambre de pression 29 située à une première extrémité axiale de la clavette 15 à la pression régnant dans le cylindre 3. La vanne 25 est disposée au niveau de l'unité hydraulique du système de freinage du véhicule, ou avantageusement, au niveau de l'étrier 4. Dans l'exemple illustré, une chambre 29 est définie par un piston auxiliaire 31 mobile selon l'axe Y et repoussée axialement selon la flèche 23 par un ressort 33 et par la face de la clavette 15, disposée en vis à vis du piston auxiliaire 31.

Dans l'exemple illustré, la clavette 15 est étagée, le diamètre d'application de la pression sur ses deux extrémités axiales étant différent. La clavette 15 comporte des joints 37 par exemple des joints toriques en élastomère permettant d'isoler la chambre 29 par rapport au cylindre 3 et au logement du ressort 35. Le piston 31 comporte un joint 39 permettant d'isoler la chambre 29 par rapport à la pression régnant dans le logement du ressort 33. Le ressort 33 se trouve dans un logement isolé du liquide de frein et par exemple rempli avec de l'air. Ces logements peuvent être reliés à l'atmosphère par un canal 34.

Le conducteur actionne la commande d'activation de frein de parking, par exemple en appuyant sur une touche ou un commutateur placé dans l'habitacle. Avantageusement, un calculateur non représenté, par exemple le calculateur du système de freinage, vérifie que les consignes du conducteur correspondent à des conditions de sécurité satisfaisantes. Par exemple, si la vitesse du véhicule est supérieure à 5km/h, l'ordre de serrer le frein de parking n'est pas directement exécuté mais le conducteur est averti de l'anomalie par un signal lumineux et/ou sonore. Le calculateur détecte le changement d'état de la touche de commande du frein de parking et contrôle l'amenée du liquide de frein sous haute pression, par exemple comprise entre 10⁷ Pa et 1,7 10⁷ Pa dans le cylindre 3 à partir d'une source de pression non représentée, tels que, un servomoteur pneumatique d'assistance au freinage (booster en terminologie anglo-saxonne) actif commandé par une vanne électrique, une pompe ou un accumulateur. Avantageusement, on met en oeuvre une source de liquide frein sous pression déjà disponible dans un véhicule moderne telles que les pompes ou accumulateurs ABS, les pompes ou accumulateurs ESP, les pompes ou accumulateurs EHB ou autres. La différence de pression entre la haute pression du liquide de frein régnant dans le cylindre 3 et la pression atmosphérique régnant notamment au niveau de la face avant du piston 5 assure l'avancement de ce dernier selon la flèche 41, en direction du disque avec serrage de patins sur le disque assurant l'immobilisation de la roue. Dans la mesure où au moins un train du véhicule est équipé avec les freins selon la présente invention, on assure l'immobilisation du véhicule. Le dispositif 7 de rattrapage de jeu avance également selon la flèche 41, de manière d'une part à éviter un surréglage par blocage en rotation de l'écrou 9 par application des portées coniques 43 de l'écrou 9 et du piston 5 et, d'autre part, à ménager un espace entre la face arrière 19' de la vis 11 et la première zone de contact 17 de la clavette 15.

L'épaisseur de cet espace facilite le déplacement de la clavette 15 selon la flèche 23.

Le calculateur, génère le signal 27 de commande d'ouverture de la vanne 25, mettant en communication le cylindre 3 avec la chambre 29. La pression dans la chambre 29 est à ce moment suffisante pour déplacer la clavette 15 selon la flèche 23. La deuxième zone d'appui 21 de la clavette 15 se trouve donc en vis à vis de la face arrière de la vis 11. Un relâchement de la pression dans le cylindre permet le recul du piston. Le calculateur commande la baisse de pression régnant dans le cylindre 3 provoquant une application ferme de la face arrière 19' de la vis 11 sur la deuxième zone d'appui 21 de la clavette 15. Simultanément, le liquide de frein s'écoule de la chambre 29 vers le cylindre 3 par l'intermédiaire de la vanne 25, sous l'action du piston auxiliaire 31 entraîné par le ressort 33 selon la flèche 23.

L'appui ferme assure le blocage en translation de la clavette 15. Il en résulte que la clavette 15 et le piston 5 (par l'intermédiaire du dispositif 7) se bloquent et/ou se verrouillent mutuellement empêchant la translation de la clavette malgré une baisse significative de la pression dans la chambre 29. Le frein de parking est donc appliqué dans une condition parfaitement stable même en l'absence d'alimentation hydraulique, électrique ou autre.

Le calculateur assure alors la fermeture de la vanne 25 isolant la chambre 29 du cylindre 3.

Il est à noter que l'application de la haute pression dans le cylindre 3 assure une déformation élastique de l'étrier 1, appelée ouverture de l'étrier, qui stocke une énergie élastique considérable assurant le maintien du freinage de parking. La quantité d'énergie stockée peut être optimisée par un dessin particulier de l'étrier ou le choix de matériaux mis en oeuvre favorisant cette déformation lorsqu'il est soumis à des contraintes importantes imposées par la haute pression du fluide hydraulique. Par exemple, on met en oeuvre un étrier en fonte, en acier, en matériau composite ou un étrier en aluminium ou en fonte avec des insert en acier. De même, cette énergie peut être stockée dans des éléments élastiques externes à l'étrier, par exemple pour améliorer la tenue du frein de parking lors de refroidissement d'un frein appliqué à haute température. En variante, le système de freinage selon la présente invention comporte des moyens de mesures de la force de serrage du frein de parking et assure une augmentation de cette force par les cycles précédemment expliqués lorsque cela est nécessaire, par exemple par suite de refroidissement d'un frein appliqué à chaud après des freinages de service importants.

Il est bien entendu que la présente invention n'est pas limitée à la formation d'un espace entre la face 19' de la vis 11 et la clavette 15. Il est parfaitement possible sans sortir du cadre de la présente invention d'appliquer directement les freins de parking en déplaçant la clavette 15 selon la flèche 23.

La désactivation du frein de parking selon la présente invention s'effectue selon les étapes suivantes :
La vanne 25 est fermée en permanence. Dans un premier temps, on applique une pression supérieure à celle qui a été utilisée pour assurer le verrouillage du frein de parking, par exemple comprise entre 1,1 x 10⁷ Pa et 2 x 10⁷ Pa.

Le piston 5 ainsi que le dispositif 7 de rattrapage de jeu avance selon la flèche 41 formant un espace. En absence de pression dans la chambre 29, la pression régnant dans le cylindre 3 s'appliquant sur la face gauche du joint 37 ramène les zones 17 en vis à vis des faces 19' de la vis 11 (translation de la clavette 15 dans le sens opposé à la flèche 23). La pression régnant dans le cylindre 3 est diminuée et le frein de parking est relâché.

Il est bien entendu que la présente invention n'est pas limitée à la mise en oeuvre de la vanne fermée au repos, mais s'étend à l'utilisation d'une vanne 25 normalement ouverte au repos.

Avantageusement, le frein selon la présente invention comporte un dispositif 71 de déverrouillage d'urgence du frein permettant de repousser manuellement la clavette 15 vers la première position dans laquelle le frein de parking est désactivé. Dans l'exemple de réalisation illustré, le dispositif 71 comporte une vis 73 vissée dans un pas de vis 75 d'un manchon 77 lui-même vissé dans un pas de vis 75 de l'étrier 1 et disposé, en alignement selon l'axe Y avec la clavette 15. Il est bien entendu que la mise en oeuvre d'une vis 73 vissée directement dans l'étrier 1 ne sort pas du cadre de la présente invention.

Il est bien entendu qu'un espace 79 est ménagé à gauche de la clavette 15 permettant sa manoeuvre de la première position dans laquelle le frein de parking n'est pas activé vers la deuxième position dans laquelle le frein de parking est activé. Si cela est nécessaire, le dispositif 71 peut comporter des canaux de passage d'air vers l'espace 79 de manière à ne pas gêner le déplacement de la clavette.

Il est à noter que l'augmentation de la rigidité du dispositif de rattrapage d'usure du patin permet de réduire l'effort nécessaire à la translation de la clavette 15 lors de l'activation du frein dans la mesure où une contrainte faible exercée par la zone 21 de la clavette 15 sur la zone 19' de la vis 11, après translation de la clavette 15 selon la flèche 23, résulte, après relâchement de la pression de liquide de frein, en une diminution modérée de la force d'application des patins sur le disque et qui devient de ce fait parfaitement acceptable.

Le frein de parking selon la présente invention s'applique notamment à l'industrie automobile.

Le frein de parking selon la présente invention s'applique principalement à l'industrie de freinage pour véhicule automobile notamment pour véhicule de tourisme.

## Revendications

1. Frein de parking à disque comportant un piston d'application de patins sur le disque, des moyens d'amener d'un fluide sous pression suffisante pour être susceptible, sur commande, d'appliquer fermement les patins sur le disque, des moyens de blocage du piston dans une première condition dans laquelle les patins sont fermement appliqués sur le disque **caractérisé en ce que** les moyens de blocage comportent une clavette (15) et un actionneur (25, 29) de déplacement sur commande de ladite clavette (15), entre une première position dans laquelle le piston (5) du frein est libre de reculer et une deuxième position dans laquelle la clavette (15) bloque le recul du piston (5), et **en ce qu'**il comporte un dispositif (7) de rattrapage d'usure de patins de frein assurant lorsque le frein de parking est activé la transmission de force entre la clavette (15) et le piston (5) comprenant une vis (11) et un écrou (9) se dévissant l'un par rapport à l'autre au fur et à mesure de l'usure des patins, la vis (11) comportant une surface d'appui (19') sur la clavette (15) et l'écrou (9) comprenant une surface d'appui sur le piston (5).

2. Frein selon la revendication 1 **caractérisé en ce que** le piston (5) comporte un puits axial (165) central d'axe X de réception de la vis (9) le diamètre du puits (165) étant légèrement supérieur au diamètre de la vis (9).

3. Frein selon la revendication 1 ou 2 **caractérisé en ce que** la vis (9) est munie d'un joint (151) d'étanchéité.

4. Frein selon l'une quelconque des revendications précédentes **caractérisé en ce qu'**une première extrémité de la vis munie de la surface d'appui (19') sur la clavette (15) forme un chapeau muni d'une partie centrale conique en pente douce, d'un décrochement coaxial à l'axe X de la vis (9) et d'une zone radialement périphérique (19") tronconique en pente douce.

5. Frein selon l'une quelconque des revendications précédentes **caractérisé en ce que** la clavette (15) comporte une première zone (17) d'appui de la vis (9) correspondant à une condition non activée du frein de parking, plane et orthogonale à l'axe X de la vis (9), une deuxième zone (21) correspondant à une condition activée du frein de parking, en pente douce et une transition en marche d'escalier reliant lesdites première et deuxième zones (17, 21).

6. Frein selon l'une quelconque des revendications précédentes **caractérisé en ce que** le piston (5) comporte une portée conique (43) concave et l'écrou (9) comporte une portée conique convexe complémentaire, d'appui sur ladite portée conique (43) concave du piston (5).

7. Frein selon l'une quelconque des revendications précédentes **caractérisé en ce qu'**il comporte des moyens de fixation de l'écrou (11) sur le piston (5) comprenant une rondelle (157) disposée dans une gorge (159) radialement interne du piston (5) des moyens de rappel élastique (157, 163) et une butée ou un roulement à bille (161).

8. Frein selon l'une quelconque des revendications précédentes **caractérisé en ce qu'**il comporte un ressort (153) de rappel de la vis (9) vers la clavette (15) tronconique ou en calotte sphérique muni de fentes radiales sur une partie de son rayon.

9. Frein selon l'une quelconque des revendications précédentes **caractérisé en ce que** le pas de vis de la vis (9) et de l'écrou (11) a un jeu fonctionnel distribué entre la vis (9) et l'écrou (11).

10. Frein selon l'une quelconque des revendications précédentes **caractérisé en ce qu'**il comporte des moyens d'activation hydraulique assurant le déplacement de la clavette (15) entre lesdites première et deuxième positions comprenant une électrovanne (25).

## Claims

1. Disk parking brake comprising a piston for applying pads to the disk, means for supplying a fluid under sufficient pressure to be able, on command, to apply the pads firmly to the disk, means for blocking the piston in a first condition in which the pads are firmly applied to the disk, **characterized in that** the blocking means comprise a wedge (15) and an actuator (25, 29) for moving said wedge (15), on command, between a first position in which the piston (5) of the brake is free to retreat and a second position in which the wedge (15) blocks the retreat of the piston (5), and **in that** it comprises a brake pad wear compensator (7) which, when the parking brake is activated, causes force to be transmitted between the wedge (15) and the piston (5), this compensator comprising a screw (9) and a nut (11) which unscrew with respect to one another as the pads wear, the screw (9) comprising a surface (19') for bearing on the wedge (15) and the nut (11) comprising a surface for bearing on the piston (5).

2. Brake according to Claim 1, **characterized in that** the piston (5) comprises a central axial well (165) of axis X for receiving the screw (9), the diameter of the well (165) being slightly greater than the diameter of the screw (9).

3. Brake according to Claim 1 or 2, **characterized in that** the screw (9) is provided with a seal (151).

4. Brake according to any one of the preceding claims, **characterized in that** a first end of the screw, provided with the surface (19') for bearing on the wedge (15), forms a hat-shaped head part provided with a gently sloping conical central portion, with an offset coaxial to the axis X of the screw (9), and with a gently sloping frustoconical radially peripheral region (19").

5. Brake according to any one of the preceding claims, **characterized in that** the wedge (15) comprises a first bearing region (17) for the screw (9), corresponding to a non-activated condition of the parking brake, this region being planar and orthogonal to the axis X of the screw (9), a gently sloping second region (21), corresponding to an activated condition of the parking brake, and a stair-like transition connecting said first and second regions (17, 21).

6. Brake according to any one of the preceding claims, **characterized in that** the piston (5) comprises a concave conical bearing surface (43) and the nut (11) comprises a complementary convex conical bearing surface for bearing on said concave conical bearing surface (43) of the piston (5).

7. Brake according to any one of the preceding claims, **characterized in that** it comprises means for fastening the nut (11) to the piston (5), comprising a washer (157) arranged in a radially internal groove (159) of the piston (5), elastic return means (153, 163) and a ball thrust bearing or a ball bearing (161).

8. Brake according to any one of the preceding claims, **characterized in that** it comprises a return spring (153) for returning the screw (9) toward the wedge (15), this spring being frustoconical or in the form of a spherical bowl and provided with radial slots over part of its radius.

9. Brake according to any one of the preceding claims, **characterized in that** the thread of the screw (9) and of the nut (11) has a functional clearance distributed between the screw (9) and the nut (11).

10. Brake according to any one of the preceding claims, **characterized in that** it comprises hydraulic activation means for moving the wedge (15) between said first and second positions, these means comprising a solenoid valve (25).

## Patentansprüche

1. Scheibenfeststellbremse, die einen Kolben zum Aufdrücken von Bremsklötzen auf die Scheibe, Einrichtungen zur Zufuhr eines Fluids unter ausreichendem Druck, um die Bremsklötze gesteuert fest auf die Scheibe drücken zu können, und Einrichtungen zum Blockieren des Kolbens in einem ersten Zustand aufweist, in dem die Bremsklötze fest auf die Scheibe gedrückt sind, **dadurch gekennzeichnet, dass** die Blockiereinrichtungen einen Keil (15) und einen Stellantrieb (25, 29) zum gesteuerten Verschieben des Keils (15) zwischen einer ersten Stellung, in der der Kolben (5) der Bremse frei zurückweichen kann, und einer zweiten Stellung aufweisen, in der der Keil (15) das Zurückweichen des Kolbens (5) blockiert, und dass sie eine Vorrichtung (7) zum Verschleißausgleich von Bremsklötzen aufweist, die, wenn die Feststellbremse aktiviert ist, die Kraftübertragung zwischen dem Keil (15) und dem Kolben (5) gewährleistet, mit einer Schraube (9) und mit einer Mutter (11), die sich im Laufe des Verschleißes der Bremsklötze voneinander losschrauben, wobei die Schraube (9) eine Auflagefläche (19') auf dem Keil (15) und die Mutter (11) eine Auflagefläche auf dem Kolben (5) enthält.

2. Bremse nach Anspruch 1, **dadurch gekennzeichnet, dass** der Kolben (5) einen zentralen axialen Schacht (165) mit einer Achse X zur Aufnahme der Schraube (9) aufweist, wobei der Durchmesser des Schachts (165) geringfügig größer als der Durchmesser der Schraube (9) ist.

3. Bremse nach Anspruch 1 oder 2, **dadurch gekennzeichnet, dass** die Schraube (9) mit einer Dichtung (151) versehen ist.

4. Bremse nach einem der vorhergehenden Ansprüche, **dadurch gekennzeichnet, dass** ein erstes Ende der Schraube, das mit der Auflagefläche (19') auf dem Keil (15) versehen ist, eine Kappe bildet, die mit einem flach ansteigenden kegelförmigen zentralen Bereich, mit einem Absatz koaxial zur Achse X der Schraube (9) und mit einer flach ansteigenden kegelstumpfförmigen radialen Umfangszone (19") versehen ist.

5. Bremse nach einem der vorhergehenden Ansprüche, **dadurch gekennzeichnet, dass** der Keil (15) eine erste Auflagezone (17) der Schraube (9) entsprechend einem nicht aktivierten Zustand der Feststellbremse, eben und orthogonal zur Achse X der Schraube (9), eine zweite, flach ansteigende Zone (21) entsprechend einem aktivierten Zustand der Feststellbremse, und einen treppenstufenförmigen Übergang aufweist, der die erste und die zweite Zone (17, 21) verbindet.

6. Bremse nach einem der vorhergehenden Ansprüche, **dadurch gekennzeichnet, dass** der Kolben (5) ein konkaves kegelförmiges Auflager (43) und die Mutter ein komplementäres konvexes kegelförmiges Auflager zur Auflage auf dem konkaven kegelförmigen Auflager (43) des Kolbens (5) aufweist.

7. Bremse nach einem der vorhergehenden Ansprüche, **dadurch gekennzeichnet, dass** sie Einrichtungen zur Befestigung der Mutter (11) am Kolben (5) aufweist, die eine Scheibe (157), die in einer radial inneren Rille (159) des Kolbens (5) angeordnet ist, elastische Rückstelleinrichtungen (153, 163) und einen Anschlag oder ein Kugellager (161) enthalten.

8. Bremse nach einem der vorhergehenden Ansprüche, **dadurch gekennzeichnet, dass** sie eine Rückstellfeder (153) der Schraube (9) zum Keil (15) aufweist, die kegelstumpfförmig oder kugelsegmentförmig und mit radialen Schlitzen auf einem Teil ihres Radius ausgestattet ist.

9. Bremse nach einem der vorhergehenden Ansprüche, **dadurch gekennzeichnet, dass** der Schraubengang der Schraube (9) und der Mutter (11) ein Betriebsspiel hat, das zwischen der Schraube (9) und der Mutter (11) verteilt ist.

10. Bremse nach einem der vorhergehenden Ansprüche, **dadurch gekennzeichnet, dass** sie ein Elektroventil (25) enthaltende hydraulische Betätigungseinrichtungen aufweist, die die Verschiebung des Keils (15) zwischen der ersten und der zweiten Stellung gewährleisten.
